Europäisches Patentamt

European Patent Office

Office européen des brevets

(19)

(11) **EP 0 764 727 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.6: **C25B 1/04**, C25B 15/08

(21) Anmeldenummer: **96114754.3**

(22) Anmeldetag: **14.09.1996**

(54) **Verfahren und Vorrichtung zur Elektrolyse**

Process and apparatus for electrolysis

Procédé et dispositif d'électrolyse

(84) Benannte Vertragsstaaten:
**CH DE ES FR GB IT LI**

(30) Priorität: **22.09.1995 DE 19535212**

(43) Veröffentlichungstag der Anmeldung:
**26.03.1997 Patentblatt 1997/13**

(73) Patentinhaber: **DORNIER GmbH**
**88039 Friedrichshafen (DE)**

(72) Erfinder:
- **Kurzweil, Peter, Dr.**
  **88090 Immenstaad (DE)**
- **Schmid, Ottmar, Dipl.-Ing.**
  **88677 Markdorf (DE)**

(56) Entgegenhaltungen:
DE-A- 1 667 366    US-A- 3 905 884
US-A- 3 917 520

## Beschreibung

Die Erfindung betrifft ein Verfahren sowie eine Vorrichtung zur Durchführung des Elektrolyse-Prozesses mit dem Ziel der Erzeugung von Reingasen wie Sauerstoff und Wasserstoff.

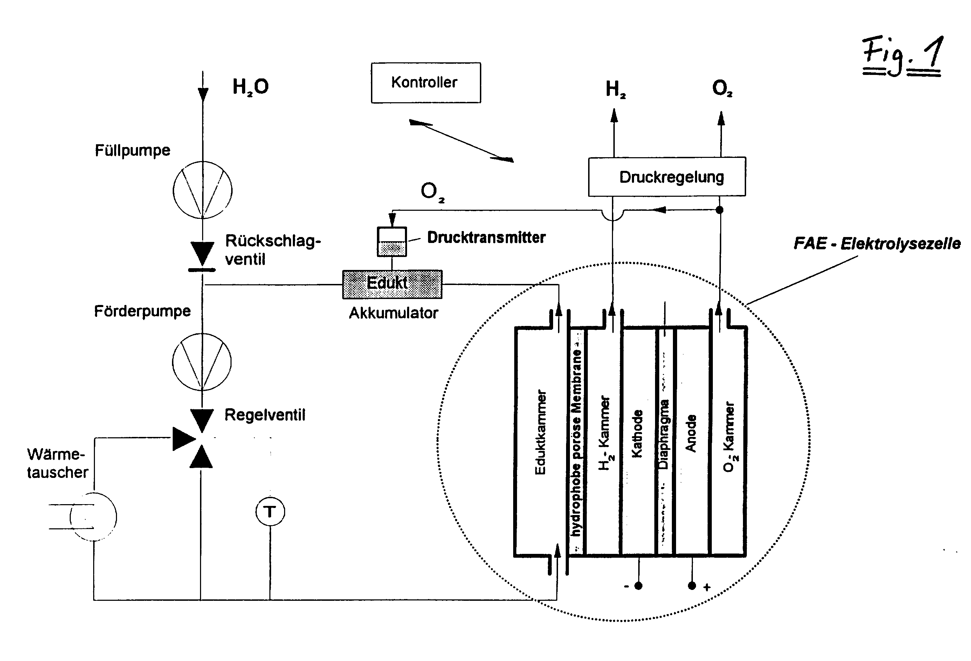

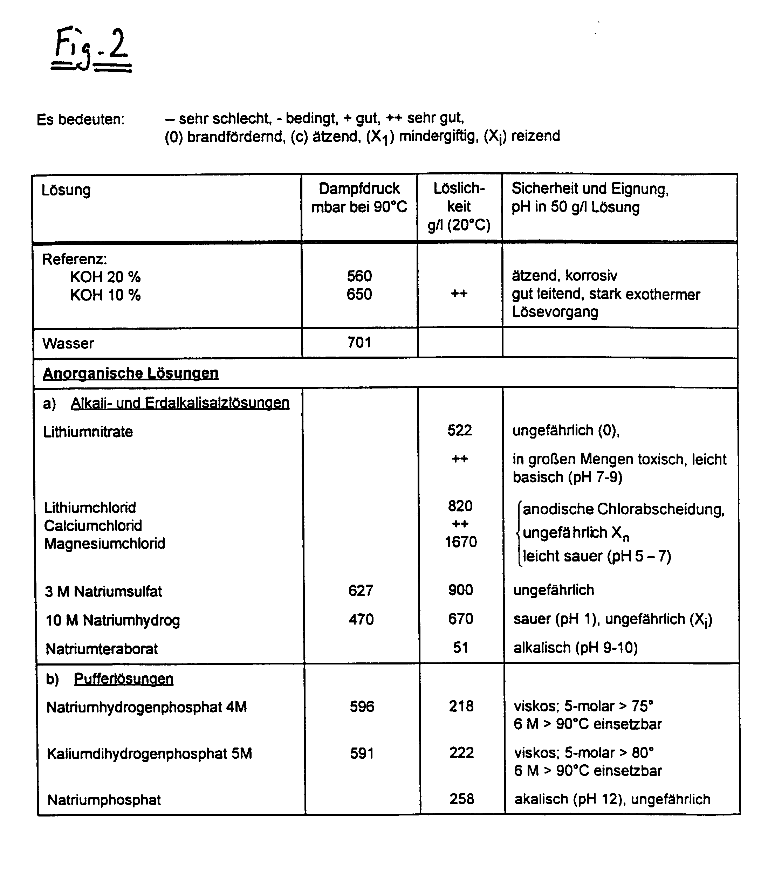

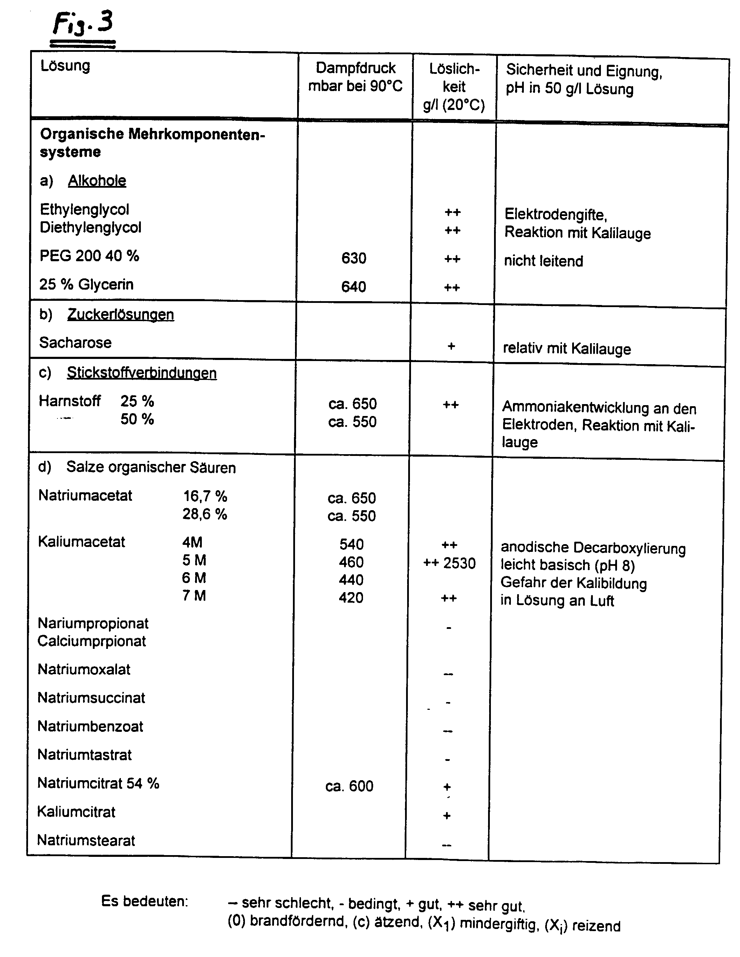

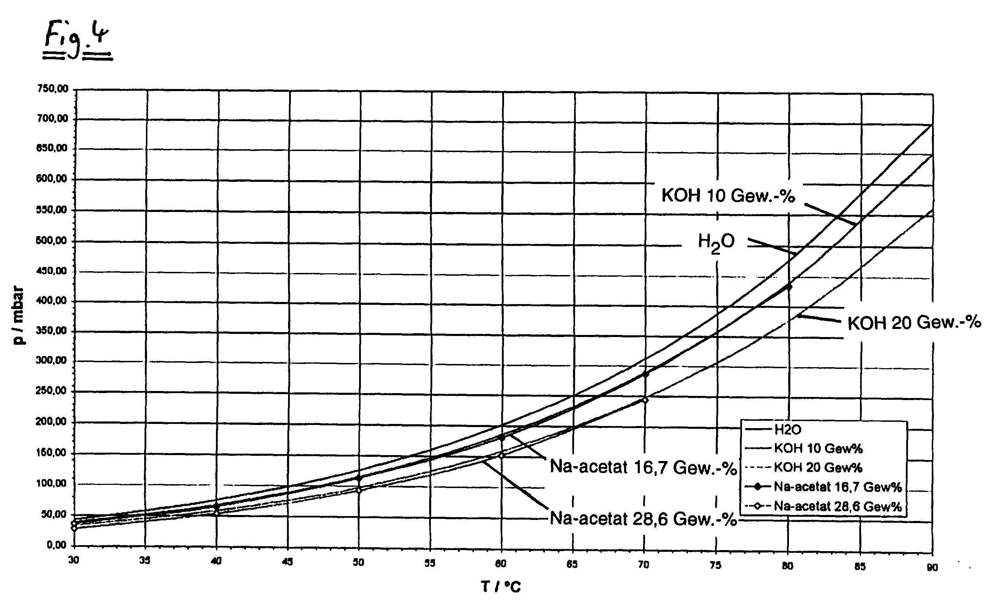

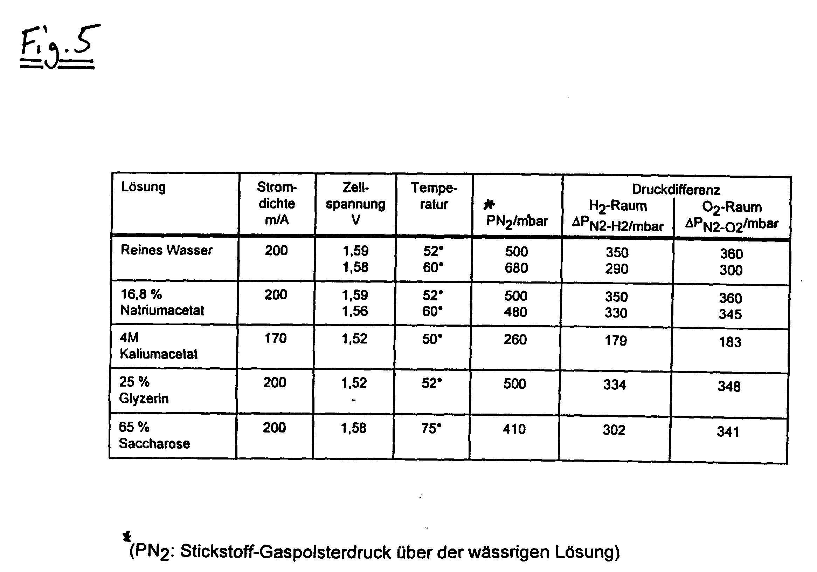

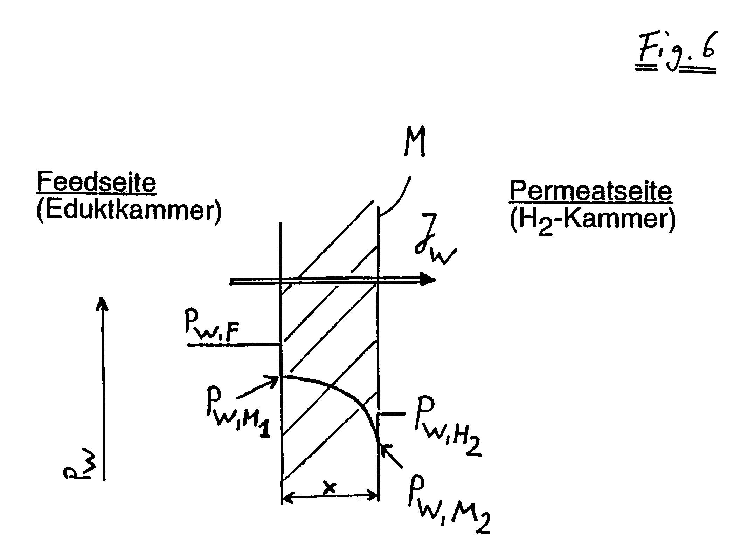

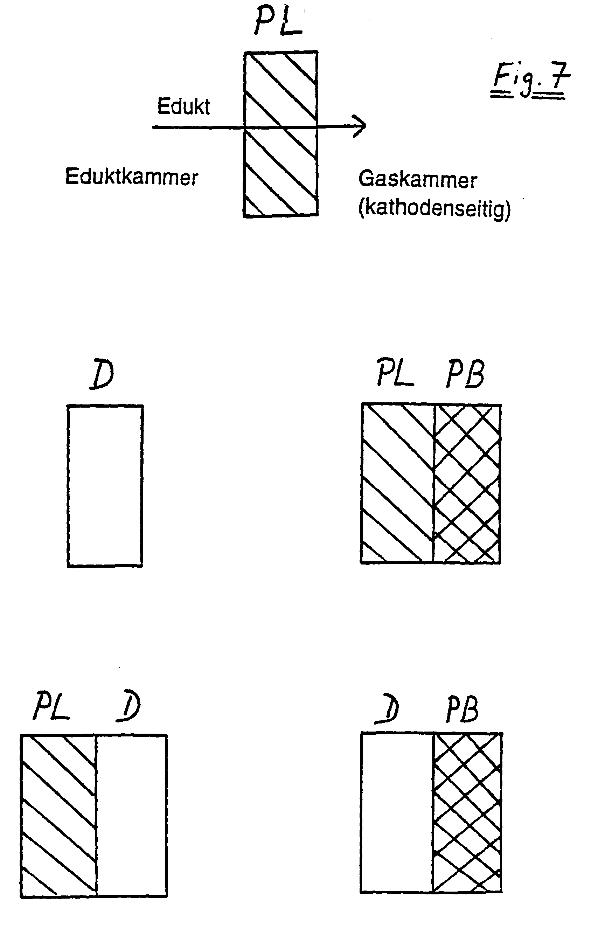

Eine bekannte Vorrichtung zur Elektrolyse von Wasser mit fixiertem, alkalischem Elektrolyten (FAE-Elektrolyseure) ist in der **Fig. 1** dargestellt (siehe z.B. R.J. Davenport et al., Space water electrolysis: space station through advanced missions, Journal of Power Sources, 36 (1991), 235 - 250). Der Kern dieser Vorrichtung ist die Elektrolysezelle. Sie umfaßt folgende Komponenten:

- Elektroden, zwischen denen ein poröses Diaphragma angeordnet ist, wobei in den Poren von Elektroden und Diaphragma eine Elektrolytlösung durch Kapillarkräfte fixiert ist.
- eine an die Kathode angrenzende Wasserstoff-Produktgaskammer ($H_2$)
- eine an die Anode angrenzende Sauerstoff-Produktgaskammer ($O_2$)
- eine von der $H_2$-Produktgaskammer durch eine Membran getrennte Kammer für das Edukt, nämlich Wasser ($H_2O$).

Die Zuführung des Wassers in die Eduktkammer erfolgt in dieser Ausführung unter Einsatz einer Füllpumpe. Zur Aufrechterhaltung der Wasserversorgung sowie zur Temperierung der Elektrolysezelle wird die Eduktkammer mittels einer Förderpumpe mit Wasser durchströmt. Hierbei erfolgt die Regelung der Wassereinstrittstemperatur in die Eduktekammer über ein 3-Wegeventil in Verbindung mit einem Wärmetauscher. Im Wasserkreislauf ist auch ein Wasser-Akkumulator und ein Drucktransmitter integriert, der eine positive Druckdifferenz zwischen Eduktkammer und $O_2$-Kammer und in der Folge davon eine positive Druckdifferenz zwischen Eduktkammer und $H_2$-Kammer ermöglicht. Der Elektrolyse-Prozeß wird durch Aufprägung einer Gleichspannung an die Elektroden oberhalb der Zersetzungsspannung von ca. 1,23 V eingeleitet (Faradaysche Elektroden reaktion). Die Elektrolysegase entstehen hierbei innerhalb der mit dem Elektrolyt gefüllten Poren der Elektroden und werden in die anliegenden Gaskammern der Elektrolysezelle bewegt. Eine entsprechende Porenverteilung der Elektroden verhindert ein Herausschieben von Elektrolyt mit den entweichenden Elektrolysegasen. Dabei wird eine Phasenseparation zwischen Elektrolysegasen und Elektrolyt innerhalb der Elektroden erzielt, zusätzliche Gas-Separatoren werden eingespart, die Elektrolysegase können direkt weiterverwendet werden.

Die Elektrolysewasserzuführung zu den Elektroden erfolgt durch Gasdiffusion von der Eduktkammer über die Membrane und Wasserstoff-Kammer zum Elektrolyten in den Elektroden. Triebkraft der Wasserdampfdiffusion ist die Differenz der Wasserdampf-Partialdrücke in Wasserreservoir und in den Elektroden:

$$\Delta P = P_{Reservoir} - P_{Elektrode}. \qquad (1)$$

Die Membran zwischen Wasserkammer und Gaskammer der Kathode verhindert eine beträchtliche Kontamination der Elektroden mit Verunreinigungen im Wasserreservoir und bewirkt eine hohe Lebensdauer der Elektroden.

Eingesetzt werden bisher ausschließlich hydrophobe Membranen.

Die beschriebene Technologie mit fixiertem Elektrolyten wurde für Raumfahrtanwendungen entwickelt und erprobt. Im Hinblick auf eine wirtschaftliche terrestrische Anwendung ergeben sich weitere Nachteile im operationellen Verhalten, die im folgenden näher erläutert werden.

### a) Probleme der irreversiblen Elektrolytverdünnung

Bekannte Elektrolyseure mit fixiertem Elektrolyten sind ausschließlich für die Verwendung mit Reinstwasser als Edukt konzipiert. Dies hat den Nachteil, daß eine kontinuierliche Elektrolytverdünnung im Diaphragma stattfindet, die zu erheblichen Leistungsverlusten und letztlich zum Betriebsausfall des Elektrolyseurs führt. Ursache dieser - auch "Fluten" genannten - Verdünnung ist, daß durch den Elektrolyseprozeß weniger Wasser in den elektrolytgefüllten Elektroden in $H_2$ und $O_2$ gespalten wird als über die Membran zum Elektrolyten transportiert wird. Das heißt, das Wasserdampfpartialdruckgefälle nach Gl. (1) zwischen Reservoir und Elektrolyt in der Kathode ist für den Betriebsfall zu groß. Die Verdünnung des Elektrolyten führt zu einer Volumenvergrößerung, bis schließlich der Elektrolytfüllgrad der Elektroden das Fassungsvermögeh der porösen Elektrodenstrukturen übersteigt.

Überschüssiger Elektrolyt tritt dann in die Gaskammern der Zelle aus und wird durch die gleichzeitige produzierten Gase ausgetragen. Dieser Elektrolytverlust in den Elektroden kann nicht mehr rückgängig gemacht werden. Im praktischen Betrieb sind daher die zulässigen Betriebsparameter wie Strom, $H_2$-Produktgasstrom, Stillstandszeiten etc. erheblich eingeschränkt. Im Stillstand oder bei Lagerung des Elektrolyseurs findet die Verdünnung des Elektrolyten verstärkt statt.

### b) Problem der chemischen Reaktivität

Die Elektrolytverdünnung durch Verwendung von Kalilauge als Edukt zu vermeiden, ist im NASA-Final Report CR 66554 von 1968 beschrieben. Die dort beschriebene prinzipielle Möglichkeiten des Einsatzes von Kalilauge scheidet jedoch aus mehreren Gründen aus:

1. Aggressive Medien wie Kalilauge sind aufgrund ihrer korrosionsfördernden Wirkung für den Einsatz im Wasserreservoir nicht geeignet (hohe Materialanforderungen).

2. Der Einsatz von Kalilauge, insbesondere in derselben Konzentration wie im fixierten Elektrolyten zu Beginn der Elektrolyse, stellt eine zu kleine Wasserdampfpartialdruckdifferenz ein, garantiert nicht die ausreichende Wasserzufuhr und begrenzt die Betriebsstromdichte und damit die Gasproduktion.

3. Durch die hohe Leitfähigkeit der Kalilauge treten parasitöse Ströme auf, die zu Verlusten führen und die Korrosion der Anlage rapid beschleunigen.

4. Die Fließeigenschaften von Kalilauge werfen ein Dichtungsproblem auf, das mit den bekannten Werkstoffen nicht beherrschbar ist.

5. Ein Sicherheitsrisiko entsteht durch das Umpumpen von Kalilauge im Reservoir.

Es ist deshalb Aufgabe der Erfindung, ein Verfahren sowie eine Vorrichtung zu schaffen, mit der die vorstehend unter Punkt a) beschriebene ungünstige Verdünnung des Elektrolyten im Elektrolysebetrieb verhindert wird, ohne die unter b) genannten Risiken einzugehen. Auch nach Stillstandszeiten von mehreren Wochen und, ebenso bei der Lagerung, soll ohne vorherige Entfernung des Edukts aus der Eduktkammer keine überhöhte Verdünnung stattfinden, die zum Austritt von Elektrolyt aus dem Porensystem der Elektroden führt.

Diese Aufgabe wird mit dem Verfahren nach Anspruch 1 sowie einem Elektrolyseur nach Anspruch 5 gelöst. Vorteilhafte Ausbildungen sind Gegenstand weiterer Ansprüche.

Entsprechend dem erfindungsgemäßen **Verfahren** wird anstatt reinem Wasser eine nichtkorrosive wässrige Lösung, Emulsion oder Suspension (im nachfolgenden jeweils nur "Lösung" genannt) als Edukt verwendet, die verglichen mit dem Elektrolyten, einen höheren Wasserdampfpartialdruck aufweist Der zugrundeliegende Gedanke ist, daß die Wasserdampfpartialdruckdifferenz zwischen Wasserreservoir und Elektrolytraum verringert und der Zustrom von Wasser in den Elektrolytraum reguliert wird, so daß ein Elektrolytverlust durch $H_2O$-Verdünnung des Elektrolyten verhindert wird. Als Produkte werden Gase wie Wasserstoff und Sauerstoff erhalten.

Die wässrige Lösung aus der Eduktkammer wird der Kathode mit vorgegebenem Dampfdruck über die Membran durch Pervaporation zugeführt.

Bevorzugt werden wäßrige Lösungen von Salzen anorganischer und organischer Säuren (Acetate, Phosphate etc), Mischungen von Wasser mit organischen Additiven (z.B. Glykole, Harnstoff, Glycerin) verwendet.

Als Elektrolyt wird z.B. eine konzentrierte, wäßrige Lösung mit hoher elektrischer Leitfähigkeit verwendet. Bevorzugte Ausführungsbeispiele hierfür sind: Säuren, Basen und Metallsalzlösungen mit hoher elektrischer Leitfähigkeit wie zum Beispiel: Kaliumhydroxid oder andere Alkali- und Erdalkalihydroxide in Konzentrationen von etwa 5 bis 12 mol/Liter; Schwefelsäure von etwa 2 bis 5 mol/Liter; Phosphorsäure etc.

Bei der erfindungsgemäßen Verwendung von wäßrigen Lösungen als Edukt können sowohl die bekannten hydrophoben Membransysteme verwendet werden, als auch sämtliche, im folgenden noch zu beschreibenden Membranen im Zusammenhang mit der erfindungsgemäßen Vorrichtung.

Die Erfindung wird anhand von Fig. näher erläutert. Es zeigen:

Fig. 1 eine Elektrolyseur entsprechend dem Stand der Technik und wie in der Beschreibungseinleitung beschrieben;

Fig. 2,3 erfindungsgemäße wäßrige Lösungen in tabellarischer Form, wobei zusätzlich eine Bewertung des sicherheitstechnischen Risikos vorgenommen wird;

Fig. 4 den Temperaturverlauf der Wasserdampfpartialdrücke von erfindungsgemäßen Na-Acetat-Lösungen im Vergleich mit KOH und $H_2O$;

Fig. 5 die Betriebsdaten eines Elektrolyseurs beim Betrieb mit unterschiedlichen erfindungsgemäßen wäßrigen Lösungen;

Fig. 6 eine Prinzipskizze zur Erläuterung der Dampfdruckerniedrigung mit porenfreien Membranen;

Fig. 7 mehrere Ausführungsbeispiele für die verwendeten Membranen entsprechend der Erfindung;

Fig. 8 einen Elektrolyseur entsprechend der Erfindung.

Die Fig. 2,3 enthalten erfindungsgemäße wässrige Lösungen in tabellarischer Form, wobei das sicherheitstechnische Risiko, sollte die Substanz unvorhergesehen in den fixierten Elektrolyseur oder an die Elektroden treten, bewertet wird.

"Ungefährlich" bedeutet hierin, daß bei sachgemäßer Handhabung keine besonderen Vorsichtsmaßnahmen zu treffen sind. Eine Bio- oder Wassergefährdung kann in geringem Maße gegeben sein. Hand- und Augenschutz ist stets empfehlenswert.

Dampfdruckerniedrigung, Gefrierpunkterniedrigung und Siedepunktserhöhung von Lösungen gegenüber dem reinen Lösungsmittel hängen von der Molmasse der gelösten Substanz und der Konzentration der Lösung ab. Salze, die aufgrund der Solvatation im Lösungsmittel dissoziieren, verursachen durch die Entropiezunahme besonders vorteilhafte Dampfdruckerniedrigungen.

Allein die Löslichkeit der Verbindungen in Wasser schränkt den Einsatz hoch konzentrierter Salzlösungen ein.

Elektrotechnisch stabile Salze sind Perchlorate, Nitrate und Phosphate. Chloride werden anodisch zu Chloraten und Chlor oxidiert.

Aus Bromiden entstehen anodische Bromide und Brom. Halogenide rufen bei empfindlichen Personen vereinzelt allergische Reaktionen hervor. Nitrate setzen beim Erhitzen nitrose Gase frei, sind somit unter Brandschutz aufzubereiten. Nitrate und Phosphate tragen in großen Mengen zur Eutrophierung der Gewässer bei. Hydroxide wirken stark korrosiv und ätzend, reagieren zum Teil heftig mit Metallen (Aluminium, Zinn, Zink u.a.), Ammoniumverbindungen, Halogene und Säuren, so daß sie weniger geeignet sind. Es sei betont, das Kalilauge als Versorgungsfluid prinzipiell eingesetzt werden kann.

**Beispiel 1**

Besonders vorteilhaft wird als wäßrige Lösung Natriumacetatlösung verwendet. Eine 16,8 Gew%ige Lösung hat etwa denselben Dampfdruck wie 10 %ige Kalilauge. Fig. 4 zeigt den Temperaturverlauf der Wasserdampfpartialdrücke von wässrigen Na-Acetat-Lösungen im Vergleich mit KOH und $H_2O$.

Natriumacetatlösung hat keine schädliche Langzeigwirkung auf die Transporteigenschaften der Versorgungsmembran (z.B. PTFE) und die Stabilität von Dichtungsmaterialien (z.B. EPDM). Der Elektrolyseur wird ebenso betrieben wie bei Versorgung mit Reinwasser. Die für die gewählte Stromdichte und Gaserzeugung ausreichende Wassermenge kann durch die Betriebstemperatur eingestellt werden.

Auch nach Ausschalten des Elektrolyseurs oder im zyklischen Betrieb führt die Verwendung von Natriumacetatlösung gegenüber Wasser zu keiner dauerhaften Verschlechterung der Zellspannungen.

Eine Kontamination der Elektroden durch Acetat oder Folgeprodukt wurde nicht festgestellt.

Setzt man im Langzeitbetrieb dagegen zum Vergleich Kalilauge als Versorgungsfluid ein, nehmen die Membran und Dichtungsmaterialien Schaden, Korrosion im Vorratsbehälter tritt auf und die Elektrolysegase enthalten Spuren von Kalilauge, die den pH-Wert in nachgeschalteten Waschflasche auf pH 9-10 ansteigen lassen.

Mit Natriumlösung als Versorgungsfluid liegt der pH-Wert im Gaswäscher unter pH 8.

Natriumacetatlösung ist als Edukt besonders vorteilhaft, da sie folgende Kriterien erfüllt:

a) sie weist eine Dampfdruckerniedrigung entsprechend mindestens 5 Gew% einer Alkalilaugenlösung und idealerweise 10 - 20 % einer KOH-Lösung auf,

b) durch ihr Zusammensetzung wird die Leistungsfähigkeit des Elektrolyseurs wie z.B. durch Kontamination des Elektrolyten oder der Elektroden mit der Lösungssubstanz, nicht eingeschränkt,

c) sie ist von geringer elektrischer Leitfähigkeit, so daß Kriechströme über Gehäusekomponenten vermieden werden,

d) ungiftig, nicht korrosiv, nicht ätzend und pyrotechnisch unbedenklich,

e) wirtschaftlich günstig verfügbar,

f) problemlos entsorgbar, und ungefährlich für das Trinkwasser,

g) Der Gefrierpunkt liegt unterhalb -20°C, so daß der Betrieb des Elektrolyseurs in der Kälte gewährleistet ist,

h) Die Löslichkeit in Wasser ist hoch,

i) Die Viskosität der Lösung ist gegenüber reinem Wasser nicht erheblich erhöht,

j) Die Siedetemperatur ist > 120°C

k) bei Betriebstemperaturen dampfen keine Zersetzungsprodukte wie $CO_2$, $NO_x$ oder Halogene aus,

l) die Lösung ist unter Betriebsbedingungen bei ca. 80°C langzeitstabil,

m) Die Lösung beeinflußt die Werkstoffeigenschaften von Edelstahl, Nickel, Kohlefasern und Kunststoffen nicht dauerhaft ungünstig.

**Beispiel 2**

Die Eignung von Biooligomeren und -polymeren als dampfdruckerniedrigende Zusätze wurde mit Saccharoselösung erprobt. Für eine Dampfdruckerniedrigung äquivalent 10 %iger Kalilauge sind sehr konzentrierte Zuckerlösungen notwendig, deren hohe Viskosität die Durchströmung des Wasserraumes beeinträchtigt.

**Beispiel 3**

Mehrwertige Alkohole wie Glyzerin und Polyethylenglycol 200 eignen sich prinzipiell als dampfdruckerniedrigender Zusatz, allerdings mit nachteiligem Einfluß auf die Werkstoffeigenschaften von Membranen und Dichtungen. Dringen die Substanzen unbeabsichtigt bis zu den Elektroden vor, sind störende Nebenreaktionen die Folge.

Trotz der bei den wäßrigen Lösungen nach Beispiel 2 und 3 festgestellten leichten Beeinträchtigungen sind diese Substanzen grundsätzlich für den erfindungsgemäßen Einsatz geeignet. Insbesondere treten die bei der Kalilauge unter Ziff. 1 bis 5 dargestellten Probleme nicht auf.

Entsprechend einer Ausführung der erfindungsgemäßen **Vorrichtung** wird eine Membran verwendet, die mindestens eine poröse hydrophile Membranschicht und/oder mindestens eine dichte Membranschicht aufweist. Grundgedanke ist auch hier, den Wasserdampfpartialdruck über dem Wasserversorgungssystem (Membranoberfläche zur kathodischen Produktgaskammer) zu senken. Anmerkungen: Unter Membran werden in dieser Anmeldung sowohl Gebilde mit nur einer Schicht verstanden als auch solche mit mehreren Schichten. Letztere werden in der Literatur auch als Membransysteme bezeichnet. Eine dichte Membranschicht bedeutet, daß die Schicht porenfrei ist.

Die angestrebte Wasserdampfpartialdruckerniedrigung wird bei den einzelnen Membranen auf folgende Weise erreicht:

1. Membran mit mindestens einer hydrophilen porösen Schicht

Durch die Kapillarkräfte der hydrophilen Poren wird kathodenseitig eine Dampfdruckerniedrigung erreicht. Wenn zusätzlich zur kathodischen Produktgaskammer hin eine hydrophobe Schicht vorhanden ist, kann gleichzeitig ein Austreten der Eduktlösung aus der Eduktkammer zur $H_2$-Kammer verhindert werden. Aufgrund der Kapillarwirkung der Poren der Membranschicht wird eine Dampfdruckerniedrigung erreicht, die zum Beispiel einer mindestens. 5 Gew %igen Kaliumhydroxidlösung entspräche. Die Dampfdruckerniedrigung mit hydrophilen porösen Membranen durch die Kapillarkräfte der Poren soll im folgenden näher erläutert werden:
Nach den Gesetzen der Thermodynamik ist der Dampfdruck über eine Flüssigkeit nicht nur von der Temperatur, sondern auch von den äußeren Kräften abhängig, die auf die Flüssigkeit einwirken.
Bei Gleichgewicht zwischen Flüssigkeit und Dampf unter Einwirkung eines äußeren Druckes $p_F$ gilt der Zusammenhang

$$v_D \cdot dp_D = v_F \cdot dp_F$$

$v_F$:     spezifisches Volumen Flüssigkeit
$v_D$:     spezifisches Volumen Wasserdampf
$dp_F$:     äußerer Druck auf Flüssigkeit
$dp_D$:     Wasserdampfdruckerniedrigung

Mit der Einführung der Dichte $q_F = 1/v_F$ und der Geltung des idealen Gasgesetztes folgt:

$$p_D/p_D{}^* = \exp(p_F/q_F\, R_D\, T) \qquad (1)$$

$p_D{}^*$:     Sattdampfdruck ($p_F = 0$)

Eine Flüssigkeit steigt in einer Kapillaren mit einer hydrophilen Oberfläche infolge der Kräfte an der Grenzfläche zwischen Flüssigkeit und Wand. Aus dem Kräftegleichgewicht ergibt sich die Zugspannung am Meniskus der Flüssigkeit in der Kapillare zu

$$p_F = g\, q_F h = -2\, O/r \qquad (2)$$

O:     Oberflächenspannung
r:     Kapillarradius

Gleichung (2) in (1) ergibt:

$$p_D/p_D{}^* = \exp(-2\, O/(r\, q_F R_D T)) \qquad (3)$$

Die Verwendung einer hydrophilen Membrane mit einer definierten Porengröße und Porenverteilung erzeugt eine definierte Wasserdampfdruckerniedrigung. Eine solche Membrane mit einer Porengröße von zum Beispiel 0,01 Mikrometer kann eine Wasserdampfdruckerniedrigung von ca. 10 % bewirken.

2. Membran mit mindestens einer dichten Schicht

Die extrem geringe Löslichkeit des Wassers in der Membran stellt einen Stofftransportwiderstand dar, der auch bei Stillstand oder Lagerung des Elektrolyseurs vorhanden ist und eine unzulässige Verdünnung des Elektrolyten verhindert. Die Dampfdruckerniedrigung mit porenfreien Membranen wird im folgenden anhand **Fig. 6** näher erläutert.
Fig. 6 zeigt in Form einer Prinzipskizze den Verlauf des Wasserdampfpartialdrucks $p_W$ in einer wasserselektiven, porenfreien Membran M. Dabei bedeuten:

$p_{W,i}$:     Wasserdampfpartialdruck im Bereich i
x:     Ortskoordinate entlang der Membrandicke.

Der pervaporative Transport von Wasser bzw. Wasserdampf durch die wasserselektive porenfreie Membrane M wird aufgrund der Wasserpartialdruckunterschiede zwischen Edukt- und $H_2$-Kammer erzeugt. Hierbei beruht die Pervaporation auf der Wasserdampfpermeabilität der eingesetzten Membran M. Der in der Fig. 6 dargestellte Prozeß umfasst nach dem Lösungsmodell die Schritte:

-   Sorption von $H_2O$ in die Membrane ($p_{w,F} \rightarrow p_{w,M1}$)
-   Diffusion von $H_2O$ durch die Membrane ($P_{w,M1} \rightarrow p_{w,M2}$)

- Desorption von $H_2O$ in die $H_2$-Kammer bedingt durch die Wasserdampfpartialabsenkung des Elektrolyten.

Der Transport von $H_2O$ durch eine wasserselektive porenfreie Membran kann durch folgende Gleichung beschrieben werden:

$$J_w = K_w \bullet D_w \bullet (dp_w/dx)$$

$J_w$ : $H_2O$-Fluß
$K_w$ : Löslichkeitskoeffizient für $H_2O$
$D_w$ : Diffusionskoeffizient für $H_2O$
$p_w$ : Wasserdampfpartialdruck

Der $H_2O$-Fluß wird sowohl durch deren Löslichkeit als auch die Diffusionsfähigkeit der Membran bestimmt. Außerdem kann der notwendige $H_2$-Fluß in den Zellen durch Anpassung der Membrandicke eingestellt werden.

Durch die erfindungsgemäße Vorrichtung wird eine Verdünnung des fixierten Elektrolyten auf z.B. 5 Gew % Alkalihydroxid sowohl während des Betriebes als auch im Stillstand und bei Lagerung des Elektrolyseurs begrenzt.

Als Elektrolyt können zum Beispiel eingesetzt werden: Säuren, Basen und Metallsalzlösungen mit hoher elektrischer Leitfähigkeit wie zum Beispiel: Kaliumhydroxid oder andere Alkali- und Erdalkalihydroxide in Konzentrationen von etwa 5 bis 12 moVLiter; Schwefelsäure von etwa 2 bis 5 mol/Liter; Phosphorsäure etc.

Bei Einsatz der erfindungsgemäßen Membran werden als Edukt die oben beschriebenen wässrigen Lösungen verwendet.

Der Elektrolyseprozeß kann bevorzugt im Druckbereich von Null bar bis 200 bar (Überdruck) und im Temperaturbereich von -30° bis 150°C betrieben werden.

Das erfindungsgemäße Verfahren bzw. die erfindungsgemäße Vorrichtung bewirkt eine wesentliche Verbesserung des operationellen Verhaltens und verbreitert das Anwendungsspektrum des Elektrolyseurs. Durch die Erfindung wird eine weitgehend selbstregelnde $H_2O$-Versorgung für das Diaphragma/Elektrodensystem erreicht.

**Ausführungsbeispiele für die Membran**

In einer ersten Ausführung besteht die Membran aus einer einzelnen Schicht, nämlich einer porösen und hydrophilen Schicht. Für diese Membranschicht werden z.B. folgende Materialien verwendet:

- PTFE hydrophilisiert
- PEEK hydrophilisiert
- Polysulfon (PSU) hydrophilisiert
- Polyethersulfon (PES) hydrophilisiert

- Metallmembranen z.B. aus Edelstahl

Es Können - auch kommerziell verfügbare - Ultrafiltrations- und Umkehrosmosemembranen mit

- Porengrößen ca.$10^{-2}$ bis $10^{-3}$ μm
- Dicken bis über 1 mm
- Porosität > 20 %

verwendet werden.

In einer zweiten Ausführung besteht die Membran ebenfalls aus einer einzelnen Schicht, wobei es sich bei dieser Schicht um eine dichte Schicht handelt. Für diese Membranschicht werden z.B. die folgenden Membranen bzw. Materialien verwendet. Diffusionsmembranen aus:

- PTFE
- Polypropylen
- fluorsilikone
- Silikon
- Silikonkautschuk

Es können - auch kommerziell verfügbare - Gaspermeations- und insbesondere Pervaporationsmembranen in verschiedenen Dicken, die sowohl symmetrisch als auch asymmetrisch mit einem Traggerüst aufgebaut sein können, verwendet werden.

In einer dritten Ausführungsform ist die Membran derart ausgebildet, daß sie neben der porösen und hydrophilen Schicht, die zur Eduktkammer hin angeordnet ist, eine zur $H_2$-Produktgaskammer hin angeordnete poröse und hydrophobe Schicht aufweist.
Für die poröse, hydrophile Schicht werden die im ersten Ausführungsbeispiel genannten Membranen verwendet.
Für die poröse hydrophobe Schicht werden z.B. die folgenden Materialien verwendet:

- PTFE
- Polypropylen (PP)
- Polyvinylidenefluoride (PVDF)
- PE

Es können - auch kommerziell verfügbare - hydrophobe Mikrofiltrationsmembranen mit

- Porengrößen 0,01 bis 2 μm
- Dicken bis 0,5 mm
- Porosität > 30 %

verwendet werden.
Die beiden beteiligten Membranschichten können fest miteinander verbunden sein (Kompositmembranen oder asymmetrische Membranen) oder lose in der Zelle verpreßt werden.

In einer weiteren, vierten Ausführungsform ist die Membran derart ausgebildet, daß sie neben der porös hydrophilen Schicht, die zur Eduktkammer hin angeordnet ist, eine zur H$_2$-Produktgaskammer hin angeordnete dichte Schicht aufweist.

Für die porös hydrophile Schicht können die im ersten Ausführungsbeispiel beschriebenen Membranschichten verwendet werden.

Für die dichte Schicht können die im zweiten Ausführungsbeispiel beschriebenen Membranschichten verwendet werden.

Die beiden beteiligten Membranschichten können fest miteinander verbunden sein oder lose in der Zelle verpreßt werden.

In einer fünften Ausführung weist die Membran zur Eduktkammer hin eine dichte Schicht auf, und zur H$_2$-Produktkammer hin eine poröse hydrophobe Schicht.

Für die dichte Schicht können die im zweiten Ausführungsbeispiel beschriebenen Membranschichten verwendet werden.

Für die poröse hydrophobe Schicht können die im dritten Ausführungsbeispiel beschriebenen Membranschichten verwendet werden.

Die beiden beteiligten Membranschichten können fest miteinander verbunden sein oder lose in der Zelle verpreßt werden.

Für die vierte und fünfte Ausführungsform können auch asymmetrische Membranen verwendet werden, bei denen die porenfreie Schicht gegenüber der porösen Schicht sehr dünn (z.B. 0,2 µm) ausgeführt ist.

**Fig. 7** zeigt zusammenfassend die vorangehend erläuterten Membranen entsprechend der Erfindung in schematischer Darstellung. Bei allen fünf gezeigten Membranen gilt, daß sich links der Membran die Eduktkammer anschließt, während sich rechts der Membran die Kathode anschließt.

Die in der Fig. 7 verwendeten Symbole bedeuten:

PL: porös hydrophil
PB: porös hydrophob
D: dicht.

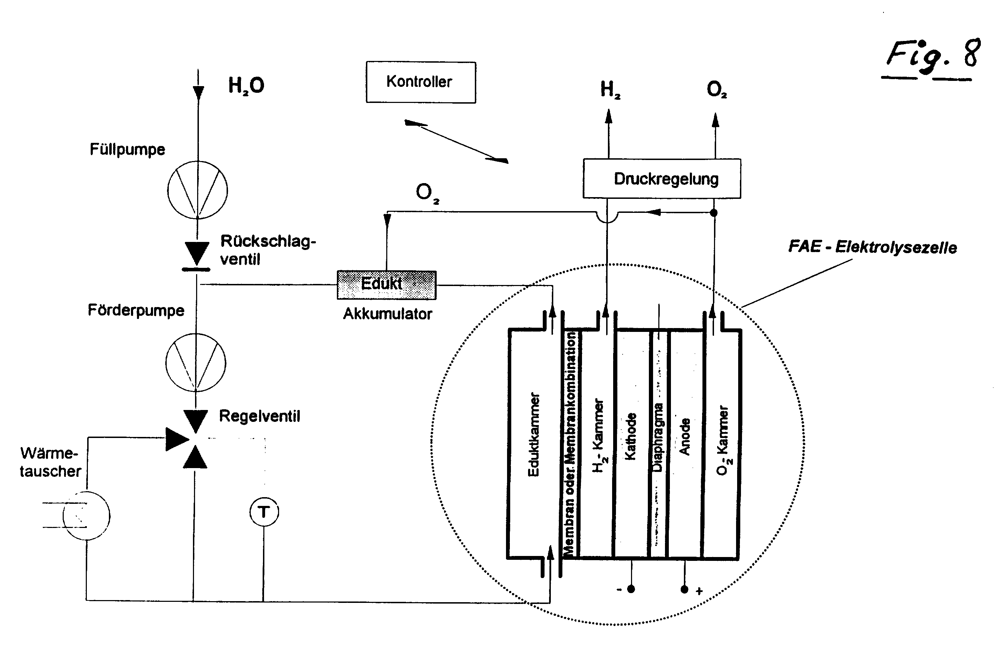

Die genannten Ausführungsformen zwei bis fünf besitzen den weiteren Vorteil, daß eine Differenzdruckbeaufschlagung von mindestens 0,5 bar von beiden Seiten der Membran erreicht wird. Dadurch wird eine direkte Druckbeaufschlagung der Wasserversorgungskammer über die Produktgase ermöglicht. Eine solche Ausführung zeigt **Fig. 8.** Der Druck in der O$_2$-Produktgaskammer dient unmittelbar zur Beaufschlagung des Edukts im Wasserreservoir (Akkumulator). Zusätzliche Einrichtungen zur Druckbeaufschlagung des Edukts, wie z.B. Drucktransmitter (Fig. 1) oder der Einsatz eines externen Gases sind nun nicht mehr notwendig.

Mehrere der erfindungsgemäßen Elektrolyseure können vorteilhaft in Serie geschaltet und zu einem Stapel (Stack) aneinander oder übereinander geschichtet werden.

## Patentansprüche

1. Verfahren zur Elektrolyse, wobei ein Elektrolyseur mit folgenden Merkmalen verwendet wird:

   - poröse Elektroden, zwischen denen ein poröses Diaphragma angeordnet ist, wobei in den Poren von Elektroden und Diaphragma ein flüssiger Elektrolyt fixiert ist
   - eine an die Kathode angrenzende Produktgaskammer
   - eine an die Anode angrenzende weitere Produktgaskammer
   - eine von der kathodischen Produktgaskammer durch eine Membran getrennte Eduktkammer,

   **dadurch gekennzeichnet,** daß als Edukt eine wässrige, nichtkorrosive Lösung eingesetzt wird, die verglichen mit dem Elektrolyten einen höheren Wasserdampfpartialdruck aufweist.

2. Verfahren nach Anspruch 1, **dadurch gekennzeichnet**, daß die wässrige Lösung eine wäßrige Lösung von Salzen anorganischer und organischer Säuren (Acetate, Phosphate etc.) oder Mischungen von Wasser mit organischen Additiven (z.B. Glykole, Harnstoff, Glycerin) ist.

3. Verfahren nach Anspruch 1, **dadurch gekennzeichnet**, daß die wässrige Lösung Natriumacetat enthält.

4. Verfahren nach einem der vorangehenden Ansprüche, **dadurch gekennzeichnet**, daß der Elektrolyt eine konzentrierte, wäßrige Lösung mit hoher elektrischer Leitfähigkeit ist.

5. Elektrolyseur, umfassend

   - poröse Elektroden, zwischen denen ein poröses Diaphragma angeordnet ist, wobei in den Poren von Elektroden und Diaphragma ein flüssiger Elektrolyt fixiert ist
   - eine an die Kathode angrenzende Produktgaskammer
   - eine an die Anode angrenzende weitere Produktgaskammer
   - eine von der kathodischen Produktgaskammer durch eine Membran getrennte Eduktkammer,

   **dadurch gekennzeichnet**, daß die Eduktkammer als Edukt eine wässrige, nichtkorrosive Lösung enthält, die verglichen mit dem Elektrolyten einen höheren Wasserdampfpartialdruck aufweist.

**6.** Elektrolyseur nach Anspruch 5, **dadurch gekennzeichnet,** daß die Membran mindestens eine poröse hydrophile Schicht und/oder mindestens eine dichte Schicht umfaßt.

**7.** Elektrolyseur nach Anspruch 5, **dadurch gekennzeichnet,** daß die Membran aus einer einzelnen Schicht besteht, und diese eine poröse hydrophile Schicht ist.

**8.** Elektrolyseur nach Anspruch 5, **dadurch gekennzeichnet,** daß die Membran aus einer einzelnen Schicht besteht, und diese eine dichte Schicht ist.

**9.** Elektrolyseur nach Anspruch 5, **dadurch gekennzeichnet,** daß die Membran zur Eduktkammer hin eine poröse hydrophile Schicht aufweist, und zur kathodischen Produktgaskammer hin eine porös hydrophobe Schicht aufweist.

**10.** Elektrolyseur nach Anspruch 5, dadurch **gekennzeichnet,** daß die Membran zur Eduktkammer hin eine poröse hydrophile Schicht aufweist, und zur kathodischen Produktgaskammer hin eine dichte Schicht aufweist.

**11.** Elektrolyseur nach Anspruch 5, **dadurch gekennzeichnet,** daß die Membran zur Eduktkammer hin eine dichte Schicht aufweist, und zur kathodischen Produktkammer hin eine poröse hydrophobe Schicht aufweist.

**12.** Elektrolyseur nach einem der vorangehenden Ansprüche 8 bis 11, **dadurch gekennzeichnet,** daß eine Druckbeaufschlagung des Edukts unmittelbar über den Produktgasdruck vorgesehen ist.

**13.** Elektrolyseur nach einem der vorangehenden Ansprüche 5 bis 12, **dadurch gekennzeichnet,** daß der Elektrolyt eine konzentrierte, wäßrige Lösung mit hoher elektrischer Leitfähigkeit ist.

**14.** Elektrolyseuranordnung, **dadurch gekennzeichnet,** daß er mehrere in Serie geschaltete Elektrolyseure nach einem der Ansprüche 5 bis 13 umfaßt.

## Claims

**1.** Process for electrolysis, using an electrolyser having the following features:

- porous electrodes between which a porous diaphragm is arranged, a fluid electrolyte being fixed in the pores of the electrodes and the diaphragm
- a product gas chamber adjacent to the cathode
- a further product gas chamber adjacent to the anode
- an educt chamber separated from the cathodic product gas chamber by a membrane,

characterised in that an aqueous, non-corrosive solution which has a higher steam partial pressure than has the electrolyte is used as the educt.

**2.** Process according to claim 1, characterised in that the aqueous solution is an aqueous solution of salts of inorganic and organic acids (acetates, phosphates, etc.) or mixtures of water with organic additives (for example glycols, urea, glycerol).

**3.** Process according to claim 1, characterised in that the aqueous solution contains sodium acetate.

**4.** Process according to any one of the preceding claims, characterised in that the electrolyte is a concentrated aqueous solution having high electrical conductivity.

**5.** Electrolyser, comprising

- porous electrodes between which a porous diaphragm is arranged, a fluid electrolyte being fixed in the pores of the electrodes and the diaphragm
- a product gas chamber adjacent to the cathode
- a further product gas chamber adjacent to the anode
- an educt chamber separated from the cathodic product gas chamber by a membrane,

characterised in that the educt chamber contains, as the educt, an aqueous, non-corrosive solution which has a higher steam partial pressure than has the electrolyte.

**6.** Electrolyser according to claim 5, characterised in that the membrane comprises at least one porous hydrophilic layer and/or at least one impervious layer.

**7.** Electrolyser according to claim 5, characterised in that the membrane comprises a single layer, and the single layer is a porous hydrophilic layer.

**8.** Electrolyser according to claim 5, characterised in that the membrane comprises a single layer, and the single layer is an impervious layer.

**9.** Electrolyser according to claim 5, characterised in that the membrane has a porous hydrophilic layer facing the educt chamber, and a porous hydrophobic layer facing the cathodic product gas chamber.

**10.** Electrolyser according to claim 5, characterised in that the membrane has a porous hydrophilic layer facing the educt chamber, and an impervious layer facing the cathodic product gas chamber.

11. Electrolyser according to claim 5, characterised in that the membrane has an impervious layer facing the educt chamber, and a porous hydrophobic layer facing the cathodic product chamber.

12. Electrolyser according to any one of the preceding claims 8 to 11, characterised in that pressure is applied to the educt directly by means of the product gas pressure.

13. Electrolyser according to any one of the preceding claims 5 to 12, characterised in that the electrolyte is a concentrated aqueous solution having high electrical conductivity.

14. Electrolyser arrangement, characterised in that it comprises several electrolysers according to any one of claims 5 to 13 connected in series.

## Revendications

1. Procédé d'électrolyse, dans lequel on utilise un électrolyseur possédant les caractéristiques suivantes:

   - des électrodes poreuses entre lesquelles est disposé un diaphragme poreux, un électrolyte liquide étant fixé dans les pores des électrodes et du diaphragme
   - une chambre de gaz-produit adjacente à la cathode
   - une autre chambre de gaz-produit adjacente à l'anode
   - une chambre d'éduit séparée de la chambre cathodique de gaz produit par une membrane,

   caractérisé en ce que l'éduit mis en oeuvre est une solution aqueuse non corrosive qui présente une pression partielle de vapeur d'eau supérieure à celle de l'électrolyte.

2. Procédé selon la revendication 1, caractérisé en ce que la solution aqueuse est une solution aqueuse de sels d'acides inorganiques et organiques (acétates, phosphates, etc.) ou des mélanges d'eau et d'additifs organiques (par exemple. glycols, urée, glycérine).

3. Procédé selon la revendication 1, caractérisé en ce que la solution aqueuse contient de l'acétate de sodium.

4. Procédé selon une des revendications précédentes, caractérisé en ce que l'électrolyte est une solution aqueuse concentrée à haute conductibilité électrique.

5. Électrolyseur, comprenant

   - des électrodes poreuses entre lesquelles est disposé un diaphragme poreux, un électrolyte liquide étant fixé dans les pores des électrodes et du diaphragme
   - une chambre de gaz-produit adjacente à la cathode
   - une autre chambre de gaz-produit adjacente à l'anode
   - une chambre d'éduit séparée de la chambre cathodique de gaz-produit par une membrane,

   caractérisé en ce que la chambre d'éduit contient, comme éduit, une solution aqueuse non corrosive qui possède une pression partielle de vapeur d'eau supérieure à celle de l'électrolyte.

6. Électrolyseur selon la revendication 5, caractérisé en ce que la membrane comprend au moins une couche poreuse hydrophile et/ou au moins une couche dense.

7. Électrolyseur selon la revendication 5, caractérisé en ce que la membrane est constituée d'une couche unique, laquelle est une couche poreuse hydrophile.

8. Électrolyseur selon la revendication 5, caractérisé en ce que la membrane est constituée d'une couche unique, laquelle est une couche dense.

9. Électrolyseur selon la revendication 5, caractérisé en ce que la membrane possède une couche poreuse hydrophile en direction de la chambre d'éduit et une couche poreuse hydrophobe en direction de la chambre cathodique de gaz produit.

10. Électrolyseur selon la revendication 5, caractérisé en ce que la membrane possède une couche poreuse hydrophile en direction de la chambre d'éduit et une couche dense en direction de la chambre cathodique de gaz-produit.

11. Électrolyseur selon la revendication 5, caractérisé en ce que la membrane possède une couche dense en direction de la chambre d'éduit et une couche poreuse hydrophobe en direction de la chambre cathodique de produit.

12. Électrolyseur selon une des revendications précédentes 8 à 11, caractérisé en ce qu'il est prévu une mise en pression d'éduit directement par la pression de gaz produit.

**13.** Électrolyseur selon une des revendications précédentes 5 à 12, caractérisé en ce que l'électrolyte est une solution aqueuse concentrée à conductibilité électrique élevée.

**14.** Agencement d'électrolyseurs, caractérisé en ce qu'il comprend, connectés en série, plusieurs électrolyseurs selon les revendications 5 à 13.

Fig. 1

# Fig. 2

Es bedeuten: — sehr schlecht, - bedingt, + gut, ++ sehr gut,
(0) brandfördernd, (c) ätzend, ($X_1$) mindergiftig, ($X_i$) reizend

| Lösung | Dampfdruck mbar bei 90°C | Löslich-keit g/l (20°C) | Sicherheit und Eignung, pH in 50 g/l Lösung |
|---|---|---|---|
| Referenz:<br>KOH 20 %<br>KOH 10 % | 560<br>650 | ++ | ätzend, korrosiv<br>gut leitend, stark exothermer Lösevorgang |
| Wasser | 701 | | |
| **Anorganische Lösungen** | | | |
| a) Alkali- und Erdalkalisalzlösungen | | | |
| Lithiumnitrate | | 522<br><br>++ | ungefährlich (0),<br><br>in großen Mengen toxisch, leicht basisch (pH 7-9) |
| Lithiumchlorid<br>Calciumchlorid<br>Magnesiumchlorid | | 820<br>++<br>1670 | ⎡anodische Chlorabscheidung,<br>⎨ungefährlich $X_n$<br>⎣leicht sauer (pH 5 – 7) |
| 3 M Natriumsulfat | 627 | 900 | ungefährlich |
| 10 M Natriumhydrog | 470 | 670 | sauer (pH 1), ungefährlich ($X_i$) |
| Natriumteraborat | | 51 | alkalisch (pH 9-10) |
| b) Pufferlösungen | | | |
| Natriumhydrogenphosphat 4M | 596 | 218 | viskos; 5-molar > 75°<br>6 M > 90°C einsetzbar |
| Kaliumdihydrogenphosphat 5M | 591 | 222 | viskos; 5-molar > 80°<br>6 M > 90°C einsetzbar |
| Natriumphosphat | | 258 | akalisch (pH 12), ungefährlich |

## Fig. 3

| Lösung | Dampfdruck mbar bei 90°C | Löslich-keit g/l (20°C) | Sicherheit und Eignung, pH in 50 g/l Lösung |
|---|---|---|---|
| **Organische Mehrkomponenten-systeme** | | | |
| a) Alkohole | | | |
| Ethylenglycol | | ++ | Elektrodengifte, |
| Diethylenglycol | | ++ | Reaktion mit Kalilauge |
| PEG 200 40 % | 630 | ++ | nicht leitend |
| 25 % Glycerin | 640 | ++ | |
| b) Zuckerlösungen | | | |
| Sacharose | | + | relativ mit Kalilauge |
| c) Stickstoffverbindungen | | | |
| Harnstoff 25 % | ca. 650 | ++ | Ammoniakentwicklung an den |
| — 50 % | ca. 550 | | Elektroden, Reaktion mit Kali-lauge |
| d) Salze organischer Säuren | | | |
| Natriumacetat 16,7 % | ca. 650 | | |
| 28,6 % | ca. 550 | | |
| Kaliumacetat 4M | 540 | ++ | anodische Decarboxylierung |
| 5 M | 460 | ++ 2530 | leicht basisch (pH 8) |
| 6 M | 440 | | Gefahr der Kalibildung |
| 7 M | 420 | ++ | in Lösung an Luft |
| Nariumpropionat | | - | |
| Calciumprpionat | | | |
| Natriumoxalat | | — | |
| Natriumsuccinat | | - | |
| Natriumbenzoat | | — | |
| Natriumtastrat | | - | |
| Natriumcitrat 54 % | ca. 600 | + | |
| Kaliumcitrat | | + | |
| Natriumstearat | | — | |

Es bedeuten:  − sehr schlecht, - bedingt, + gut, ++ sehr gut.
(0) brandfördernd, (c) ätzend, $(X_1)$ mindergiftig, $(X_i)$ reizend

*Fig. 4*

$$Fig.5$$

| Lösung | Strom-dichte m/A | Zell-spannung V | Tempe-ratur | *PN$_2$/mbar | Druckdifferenz | |
|---|---|---|---|---|---|---|
| | | | | | H$_2$-Raum $\Delta P_{N2-H2}$/mbar | O$_2$-Raum $\Delta P_{N2-O2}$/mbar |
| Reines Wasser | 200 | 1,59 1,58 | 52° 60° | 500 680 | 350 290 | 360 300 |
| 16,8 % Natriumacetat | 200 | 1,59 1,56 | 52° 60° | 500 480 | 350 330 | 360 345 |
| 4M Kaliumacetat | 170 | 1,52 | 50° | 260 | 179 | 183 |
| 25 % Glyzerin | 200 | 1,52 - | 52° | 500 | 334 | 348 |
| 65 % Saccharose | 200 | 1,58 | 75° | 410 | 302 | 341 |

*(PN$_2$: Stickstoff-Gaspolsterdruck über der wässrigen Lösung)

EP 0 764 727 B1

EP 0 764 727 B1

$$Fig. 6$$

M

**Feedseite**
(Eduktkammer)

**Permeatseite**
($H_2$-Kammer)

$J_W$

$P_{W,F}$

$P_{W,M_1}$

$P_{W,H_2}$

$P_{W,M_2}$

$P_W$

x

PL

Fig. 7

Edukt

Eduktkammer

Gaskammer
(kathodenseitig)

D

PL PB

PL D

D PB

Fig. 8

H₂O

Füllpumpe

Rückschlagventil

Förderpumpe

Regelventil

Wärmetauscher

T

Kontroller

H₂    O₂

Druckregelung

O₂

Edukt
Akkumulator

FAE - Elektrolysezelle

Eduktkammer

Membran oder Membrankombination

H₂- Kammer

Kathode

Diaphragma

Anode

O₂- Kammer

-    +

EP 0 764 727 B1